# EUROPÄISCHE PATENTSCHRIFT

(11) **EP 2 543 493 B1**
(45) Veröffentlichungstag und Bekanntmachung des Hinweises auf die Patenterteilung: **25.02.2015**
(21) Anmeldenummer: 12401139.6
(22) Anmeldetag: 03.07.2012
(51) Int. Cl.: B29C 47/90, B29C 47/08, B29C 47/92, B29C 47/02, B29C 35/02, B21C 25/08, B29C 47/34

(54) **Vorrichtung zur variablen Einstellung einer Durchlassöffnung**
Device for variable adjustment of an exit
Dispositif pour le réglage variable d'une ouverture de passage

(30) Priorität: 05.07.2011 DE 102011051571
(43) Veröffentlichungstag der Anmeldung: 09.01.2013
(73) Patentinhaber: TROESTER GmbH & Co. KG, 30519 Hannover (DE)
(72) Erfinder: Jung, Joachim, 30519 Hannover (DE); Malkus, Michael, 30625 Hannover (DE)
(74) Vertreter: Scheffler, Jörg

(56) Entgegenhaltungen:
- EP-A1- 1 739 693
- WO-A1-2004/106034
- WO-A1-2005/077562
- DE-A1-102008 028 641
- DE-B4-102005 020 296
- FR-A5- 2 130 986
- US-A- 5 989 466

## Beschreibung

Die Erfindung betrifft eine Vorrichtung zur variablen, insbesondere stufenlosen Einstellung einer Durchlassöffnung für ein aus einem unter Überdruck stehenden, beispielsweise rohrförmigen Behälter kontinuierlich oder diskontinuierlich austretendes strangförmiges Erzeugnis, mit zwei einander entlang linienförmiger Kontaktflächen berührenden Wälzkörpern mit jeweils zumindest einer zumindest abschnittsweise am Umfang verlaufenden, konkaven Ausnehmung, wobei die Ausnehmung entlang ihrer Haupterstreckung eine unterschiedliche Breite und Tiefe aufweist und die Ausnehmungen der Wälzkörper gemeinsam die Durchlassöffnung begrenzen, wobei die Querschnittsfläche der Durchlassöffnung durch eine relative Drehung der Wälzkörper um ihre jeweilige Schwenkachse veränderbar ist.

Der Dimensionswechsel bei der Extrusion von kontinuierlich oder diskontinuierlich aus einem Spritzkopf austretenden, strangförmigen Erzeugnissen, wie beispielsweise elektrischen Leitern, erfordert in der Praxis einen erheblichen Zeitaufwand. Hierzu wird die Fertigungslinie vollständig gestoppt und dadurch die Produktion unterbrochen. Unter hohem Personal- und Arbeitsaufwand erfolgt dann eine Umrüstung und ein Austausch des die Durchlassöffnung aufweisenden Spritzkopfeinsatzes, der die Ummantelungsschichten bestimmenden Spritzwerkzeuge sowie der Enddichtung des Behandlungsraums, die unter Umständen zuvor eigens hergestellt werden müssen. Eine flexible Fertigung von Erzeugnissen mit in Längsrichtung unterschiedlichen Durchmesserbereichen ist daher in der Praxis kaum möglich.

Die Eigenschaften der strangförmigen Erzeugnisse werden dabei maßgeblich durch die chemische Vernetzung bestimmt, die im Inneren des mit einem gasförmigen Medium, insbesondere einem Inertgas wie Stickstoff oder einem Sattdampf, gefüllten, rohrförmigen Behälters erfolgt, der hierzu mittels der Durchlassöffnung dichtend verschlossen ist. Die Vernetzung erfolgt vorzugsweise bei Drücken bis zu 25 bar. Je nach Kabelgewicht findet die Herstellung der Erzeugnisse mit einer horizontalen, vertikalen, geneigten oder einer einer Kettenlinie folgenden Ausrichtung des Behälters statt.

Eine gattungsgemäße Vorrichtung zur variablen Einstellung einer Durchlassöffnung für einen extrudierten Strang ist durch die US 5,989,466 A bekannt, bei der zwei aufeinander abrollbare Zylinder mit einem halbkreisförmigen Nutabschnitt gemeinsam die Durchlassöffnung begrenzen. Der Radius der halbkreisförmigen Ausnehmung der Nut variiert fortlaufend in Umfangsrichtung der gekrümmten Oberfläche. Durch synchrones Drehen der beiden Zylinder um ihre jeweilige Mittellängsachse wird die eingeschlossene, durch die Nutabschnitte geformte Durchlassöffnung im Durchmesser entsprechend variiert.

Als nachteilig erweist sich dabei in der Praxis, dass zwar die eingestellte Durchlassöffnung in der durch die Kontaktlinie sowie die Schwenkachsen bestimmten Ebene einstellbar ist, jedoch zugleich in einer zu dieser Ebene beabstandeten parallelen Ebene aufgrund der reduzierten Breite oder Tiefe der nutenförmigen Ausnehmung eine Hinterschneidung entsteht, die in den freien Durchlassquerschnitt hineinragt. Dadurch verengt sich die in der Durchlassebene erzeugte exakte Breite im Verlauf des weiteren Transports in einer Ebene hinter der durch die Kontaktlinie sowie die Schwenkachsen bestimmten Ebene, sodass es hier zu einem unerwünschten Kontakt mit dem Erzeugnis kommt. Dieser Kontakt beeinträchtigt die Oberflächenbeschaffenheit des strangförmigen Erzeugnisses, sodass hohe Qualitätsanforderungen mit dieser Vorrichtung nicht erfüllt werden können.

Zur Lösung dieses Nachteils der mangelnden Oberflächenqualität schlägt die DE 10 2005 020 296 B4 vor, bei einer Vorrichtung für die Profilextrusion mit einer variablen Durchlassöffnung vorzugsweise drei am Umfang mit gleichem Winkelversatz um das zu extrudierende Profil angeordnete Wälzkörper vorzusehen, die im Querschnitt eine kreisrunde Durchlassöffnung bilden, durch die das zu extrudierende Profil hindurchgeführt wird. Dadurch, dass die Durchlassöffnung durch drei Kreissektoren gleicher Größe gebildet ist, wird der unerwünschte Kontakt der Wälzkörper in einer Ebene in Durchgangsrichtung hinter der Ebene der Durchlassöffnung weitgehend vermieden und dadurch die Qualität wesentlich verbessert. Die Vorrichtung kann somit zum Kalibrieren, Führen, Klemmen oder Abdichten eines Rohres verwendet werden. Jeder Wälzkörper ist um seine Mittelachse verdrehbar, wobei alle drei Wälzkörper mit einer nicht dargestellten zentralen Verstellvorrichtung gleichzeitig um einen gleichen Winkelbetrag um die Drehachse verdrehbar sind.

Als nachteilig erweist sich bei einer solchen Vorrichtung, dass die zur Erzeugung von strangförmigen Erzeugnissen mit einer hohen Oberflächenqualität erforderliche Anzahl von Wälzkörpern, in der Praxis zumindest drei Wälzkörper, mit einem erheblichen Aufwand zur druckfesten Abdichtung verbunden ist. Es ist für den Fachmann unmittelbar erkennbar, dass zumindest eine Abdichtung jedes Wälzkörpers an seinem Umfang sowie an seinen Stirnseiten sowie auch eine Dichtung der Wälzkörper untereinander erforderlich ist, was bei einer zunehmenden Anzahl von Wälzkörpern zu einem erheblichen konstruktiven und fertigungstechnischen Aufwand sowie zu hohen Herstellungskosten führt.

Ausgehend von diesem Stand der Technik liegt der Erfindung die Aufgabe zugrunde, eine einfache und insbesondere problemlos abzudichtende und variabel einstellbare Durchlassöffnung zu schaffen, durch die auch hohe Qualitätsanforderungen im Hinblick auf das durch die Durchlassöffnung austretende strangförmige Erzeugnis erfüllt werden.

Diese Aufgabe wird erfindungsgemäß mit einer Vorrichtung gemäß den Merkmalen des Anspruchs 1 gelöst. Die weitere Ausgestaltung der Erfindung ist den Unteransprüchen zu entnehmen.

Erfindungsgemäß ist also eine Vorrichtung vorgesehen, bei der jeder Wälzkörper zumindest einen die jeweilige Ausnehmung einschließenden elastisch verformbaren Bereich aufweist, sodass die entlang der Kontaktlinie gegeneinanderliegenden Wälzkörper gemeinsam in einer unverformten Ruheposition eine von der Kreisform oder einer anderen Sollform wesentlich abweichende, insbesondere ovale Durchlassöffnung einschließen und in einer entlang der linienförmigen Kontaktfläche gegeneinander vorgespannten, elastisch verformten Arbeitsposition durch eine definierte Materialverformung die gewünschte, vorzugsweise kreisförmige Durchlassöffnung einschließen. Der Erfindung liegt dabei die überraschende Erkenntnis zugrunde, dass eine definierte Verformungskraft, durch welche die Wälzkörper in der Arbeitsposition gegeneinander vorgespannt werden, entlang der linienförmigen Kontaktfläche beiderseits der Ausnehmung zu einer Verformung führt, die in die Ausnehmung hineinreicht. Diese Verformung reduziert die Breite der Ausnehmung wesentlich stärker als die Tiefe der Ausnehmung. Entgegen der ersten Erwartung wird also nicht etwa die Tiefe der Ausnehmung aufgrund der Verformungskraft, sondern vielmehr die Breite der Ausnehmung quer zur Krafteinleitung wesentlich vermindert. Dieser Effekt zieht die folgende vorteilhafte Wirkung nach sich: In zu der Durchlassöffnung parallelen Ebenen vor und hinter der Durchlassöffnung ist in der Arbeitsposition der Wälzkörper keine oder nur eine äußerst geringe Verformungskraft wirksam, sodass unmittelbar vor und hinter der Durchlassöffnung eine Rückstellbewegung gegenüber der Verformung in der Ebene der Durchlassöffnung erfolgt, sodass bereits unmittelbar vor und hinter der Ebene der Durchlassöffnung durch die Rückstellbewegung eine deutliche Erweiterung der Breite bis auf die Breite der unbelasteten Wälzkörper erfolgt. Durch diese von der unterschiedlichen Breite und Tiefe der Ausnehmung entlang ihrer Haupterstreckung unabhängige Erweiterung bzw. Verbreiterung der Ausnehmung in den Ebenen vor und hinter der Durchlassöffnung kann erfindungsgemäß ein unerwünschter Kontakt des Wälzkörpers mit dem strangförmigen Erzeugnis zuverlässig ausgeschlossen werden. Hierdurch wird in einfacher Weise die Qualität, insbesondere der Oberflächenbeschaffenheit des Erzeugnisses wesentlich verbessert.

Die erfindungsgemäße Vorrichtung ist dabei nicht auf Abdichtungen im engeren Sinne beschränkt, sondern kann ebenso zur Kalibrierung oder Formgebung von nahezu beliebigen strangförmigen Erzeugnissen verwendet werden. Ferner können die Wälzkörper auch mehrere Ausnehmungen zur gleichzeitigen Einstellung mehrerer Durchlassöffnungen aufweisen.

Dadurch, dass erfindungsgemäß die Herstellungsqualität verbessert ist, kann die Vorrichtung auf genau zwei Wälzkörper beschränkt werden, um so den Herstellungsaufwand zu verringern und die Abdichtung der Vorrichtung gegenüber der Umgebung zu vereinfachen.

Hierdurch wird in vorteilhafter Weise aufgrund der elastischen Verformung ein verdrängter Materialanteil parallel zur Kontaktlinie in den Bereich der Ausnehmung hineinverformt bzw. verlagert, sodass sich die Breite der Ausnehmung wesentlich stärker vermindert als die Tiefe der Ausnehmung und sich aufgrund der Verformung ein kreisförmiger Durchlass ergibt. Für den Fachmann ist dabei ohne Weiteres verständlich, dass sich erst aufgrund dieser gezielten Materialverformung die unerwünschte Hinterschneidung in einer zu der Durchlassebene parallelen Ebene und der damit verbundene erneute Kontakt der Wälzkörper mit dem Erzeugnis vermeiden lässt, weil allein die Änderung der Breite der Ausnehmungen in Richtung ihrer Haupterstreckung nicht geeignet ist, einen solchen Kontakt zu vermeiden.

Ausgehend von der Ruheposition, in welcher die Wälzkörper bereits entlang der Kontaktlinie gegeneinanderliegen, erfolgt die Verlagerung in die Arbeitsposition und die damit verbundene elastische Verformung der Wälzkörper durch eine Zustellbewegung von 1 bis 10 mm, vorzugsweise zwischen 2 und 5 mm.

Zur Kontrolle der optimalen kreisförmigen Sollform der Durchlassöffnung in der Arbeitsposition können an sich bekannte Sensoren, insbesondere berührungslose Messeinrichtungen, wie beispielsweise optische Sensoren, eingesetzt und die so erfassten Signale als Regelgröße für die Einstellung der Vorspannkraft genutzt werden.

Die Wälzkörper könnten ausschließlich aus einem elastisch verformbaren Material bestehen. Besonders vorteilhaft erweist sich in der Praxis jedoch eine Abwandlung der Vorrichtung, bei welcher der Wälzkörper einen Kern aus einem im Wesentlichen formstabilen Material aufweist, welcher umfangsseitig von einem elastischen Verformungselement eingeschlossen ist. Der Kern bildet dabei beispielsweise mit stirnseitigen Vorsprüngen die jeweilige Drehachse der Wälzkörper oder hat eine Kernbohrung, welche eine Achse bzw. ein Achslager aufnimmt. Bei einem auftretenden Verschleiß des elastischen Verformungselements kann dieses ersetzt werden, ohne dass hierzu der gesamte Wälzkörper ausgetauscht werden muss. Das Verformungselement liegt gegen den Umfang des Kerns an und hat beispielsweise eine schlauchartige Beschaffenheit. Selbstverständlich kann das Verformungselement auch unlösbar mit dem Kern verbunden sein. Weiterhin kann das Verformungselement auch verschiedene Zonen unterschiedlicher Materialeigenschaften, insbesondere unterschiedlicher Elastizität, aufweisen.

Dabei erweist es sich als besonders zweckmäßig, wenn das Verformungselement über den gesamten Umfang des Wälzkörpers im Bereich der Ausnehmung eine im Wesentlichen konstante Materialstärke aufweist. Hierdurch wird eine von der eingestellten Winkelstellung des Wälzkörpers und damit der Breite der Ausnehmung im Wesentlichen unabhängige Verformung des Verformungselements sichergestellt, sodass die gewünschte kreisförmige Kontur bei einer weitgehend konstanten Vorspannung der Wälzkörper erreicht wird.

Weiterhin ist es besonders Erfolg versprechend, wenn das Verformungselement den gesamten Umfang des Wälzkörpers und zumindest abschnittsweise die Stirnfläche des Wälzkörpers bildet, um so einerseits eine zuverlässige Dichtung der gegeneinanderliegenden Wälzkörper, andererseits auch eine stirnseitige Abdichtung gegenüber einem die Wälzkörper einschließenden Gehäuse durch das Verformungselement zu ermöglichen. Hierzu bildet das Verformungselement beispielsweise einen ringförmig geschlossenen, axial vorspringenden Bereich, welcher vergleichbar einem O-Ring als Dichtungsring wirkt.

Bei einer anderen vorteilhaften Abwandlung ist zwischen dem Gehäuse und einer Stirnfläche des jeweiligen Wälzkörpers ein Dichtungselement angeordnet, welches insbesondere bei einem auftretenden Verschleiß problemlos ausgetauscht werden kann.

Eine weitere, ebenfalls besonders praxisnahe Abwandlung wird auch dadurch erreicht, dass in dem Ringspalt zwischen dem Gehäuse und dem Umfangsabschnitt der Wälzkörper eine insbesondere durch eine radiale Erweiterung des Verformungselements gebildete Dichtlippe, beispielsweise parallel zu der Schwenkachse, angeordnet ist. Diese Dichtlippe ist vorzugsweise in einem Umfangsabschnitt des Wälzkörpers angeordnet, welcher keine Ausnehmung aufweist und damit einem Umfangsabschnitt eines Zylinders entspricht. Ein in axialer Richtung verlaufender linienförmiger radialer Vorsprung bildet somit eine Dichtlippe, durch die in einfacher Weise eine Abdichtung des Ringspalts erreicht werden kann.

Grundsätzlich kann jeder Wälzkörper um eine beliebige, beispielsweise auch virtuelle Schwenkachse beweglich angeordnet sein. Besonders praxisgerecht ist hingegen eine Ausgestaltung, bei welcher jeder Wälzkörper um die Mittellängsachse seiner zylindrischen Hüllform schwenkbeweglich angeordnet ist, um so ein einfaches Abwälzen der Wälzkörper aufeinander ohne eine Verlagerung der jeweiligen Schwenkachse zu erreichen. Dadurch kann die zur Einstellung der Durchlassöffnung erforderliche Schwenkbewegung von einem Wälzkörper auf den anderen Wälzkörper übertragen werden.

Von Vorteil ist es demgegenüber jedoch, wenn die Wälzkörper zur Einstellung der Durchlassöffnung insbesondere mittels eines gemeinsamen Antriebs synchron schwenkbeweglich ausgeführt sind, sodass die weggesteuerte synchrone Bewegung und damit die gewünschte Kreiskontur in der Durchlassebene sichergestellt werden. Je nach Einsatzzweck kann die Bewegung dabei gleichsinnig oder gegenläufig, beispielsweise mittels eines Zahnradpaars, eingeleitet werden.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine erfindungsgemäße Vorrichtung mit zwei Wälzkörpern in einer geschnittenen Seitenansicht;
- Fig. 2: eine entlang der Linie II-II geschnittene Darstellung der in Figur 1 gezeigten Vorrichtung;
- Fig. 3: das der erfindungsgemäßen Vorrichtung zugrunde liegende Funktionsprinzip anhand einer Prinzipdarstellung der Wälzkörper in einer Ruheposition;
- Fig. 4: in einer weiteren Prinzipdarstellung die in Figur 3 gezeigten Wälzkörper in einer elastisch verformten Arbeitsposition;
- Fig. 5: eine vergrößerte Schnittdarstellung des in den Figuren 1 und 2 gezeigten Wälzkörpers.

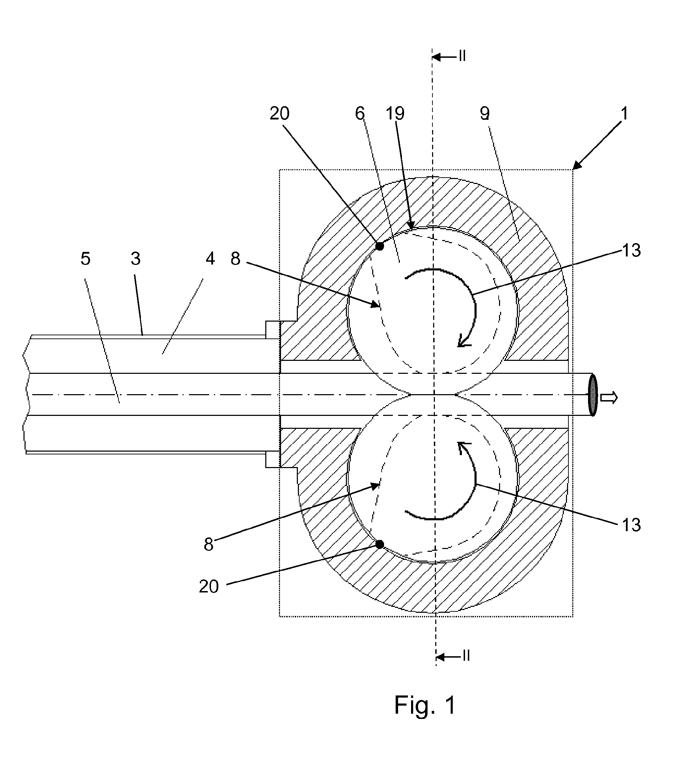

Eine erfindungsgemäße Vorrichtung 1 zur variablen Einstellung einer als Dichtung wirksamen Durchlassöffnung 2 für ein aus einem unter Überdruck stehenden, rohrförmigen Behälter 3 austretendes Erzeugnis 5 wird nachstehend anhand der Figuren 1 bis 5 näher erläutert.

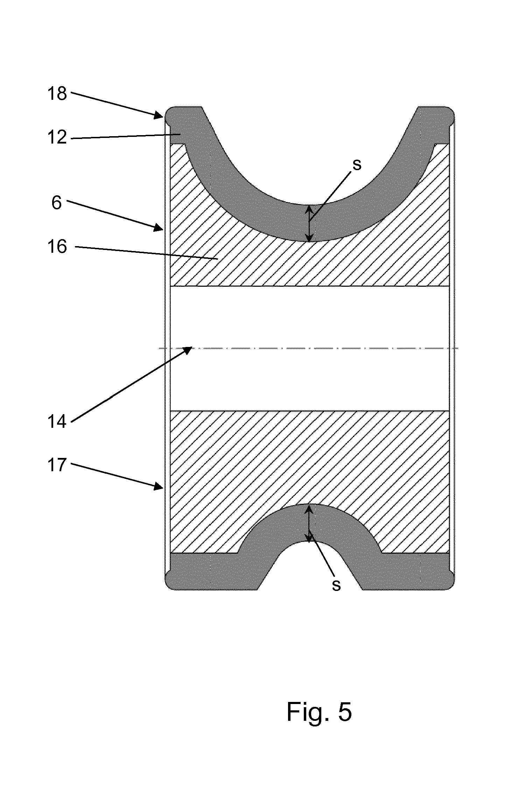

Die Vorrichtung 1 dient dabei dem Abdichten eines Druckraums 4 gegen das durch die Durchlassöffnung 2 austretende strangförmige Erzeugnis 5. Wesentlicher Bestandteil der Vorrichtung 1 sind zwei parallele, eine im Wesentlichen zylindrische Grundform aufweisende Wälzkörper 6, die eine sich entlang des Umfangs stetig verändernde Ausnehmung 7 als Profilierung aufweist. Diese stetig zunehmende bzw. abnehmende Tiefe T der Ausnehmung 7 ist in Figur 1 als gestrichelte Linie 8 angedeutet und in Figur 5 durch die einander gegenüberliegenden Bereiche der Ausnehmung 7 desselben Wälzkörpers 6 erkennbar.

Jede Winkelstellung der Wälzkörper 6 führt dabei in Verbindung mit der entsprechenden Ausnehmung 7 des gegenüberliegenden Wälzkörpers 6 zu einer bestimmten, an das zu erzeugende strangförmige Erzeugnis 5 angepassten Durchlassöffnung 2, sodass durch eine synchrone Drehung der Wälzkörper 6 unterschiedlich große kreisförmige Konturen des Erzeugnisses 5 abgedichtet werden können. Die Wälzkörper 6 sind in ihrer Arbeitsposition innerhalb eines druckdichten Gehäuses 9 gegeneinander mit einer Vorspannkraft F belastet und drehbeweglich gelagert, wobei die synchrone Verstellung der Wälzkörper 6 über ein jeweils einem Wälzkörper 6 zugeordnetes Zahnradpaar 10 erfolgt, das mit einem gemeinsamen Antrieb 11 verbunden ist.

Ein wesentlicher Erfindungsgedanke betrifft die Formgebung der Ausnehmung 7. Hierzu hat jeder Wälzkörper 6 zumindest ein die jeweilige Ausnehmung 7 begrenzendes Verformungselement 12, sodass die entlang der Kontaktlinie gegeneinanderliegenden Wälzkörper 6 gemeinsam in einer unverformten Ruheposition, also in einer gegeneinander anliegenden, jedoch nicht vorgespannten Position, eine von der Kreisform wesentlich abweichende, insbesondere ovale Durchlassöffnung 2' einschließen.

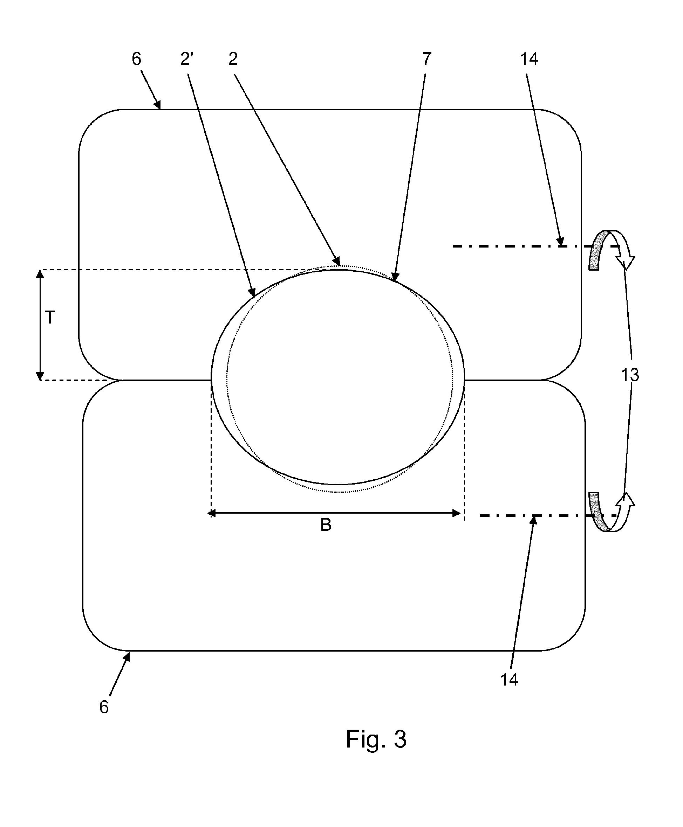

Diese Geometrie ist in Figur 3 als Prinzipdarstellung zu erkennen. Die in dieser durch eine Drehung in Pfeilrichtung 13 um die jeweilige Schwenkachse 14 eingestellte Sollgeometrie der Durchlassöffnung 2 ist in Figur 3 lediglich gestrichelt dargestellt, um die Abweichung deutlich hervorzuheben. Die sich ergebende Kontur der Durchlassöffnung 2 ist durch die Tiefe T und die Breite B der gegenüberliegenden Ausnehmungen 7 bestimmt.

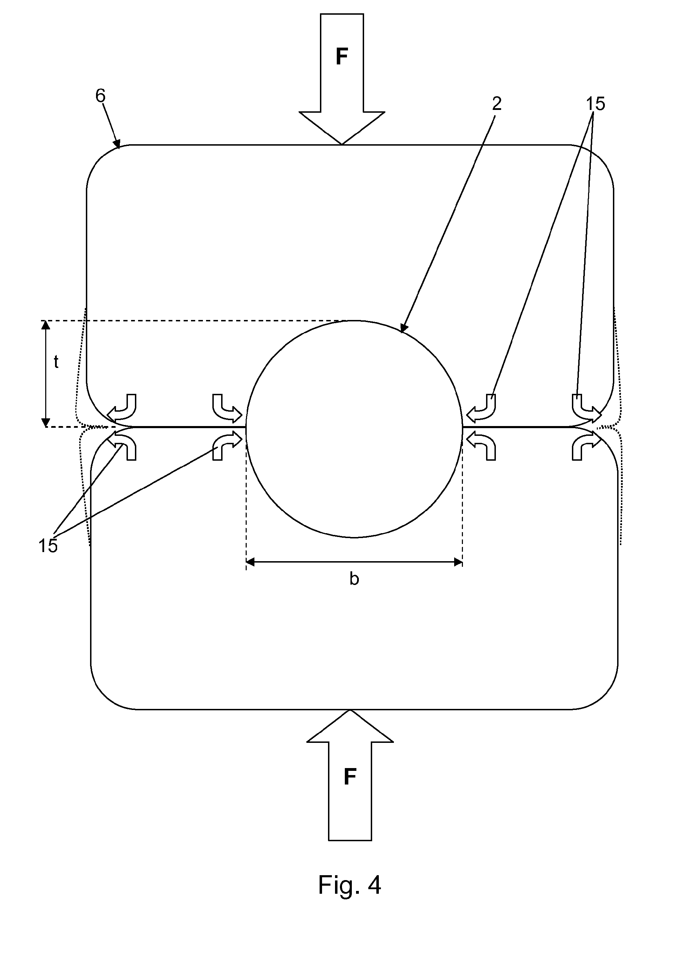

Durch eine die Wälzkörper 6 gegeneinander verspannende, vorbestimmte Vorspannkraft F wird in der unveränderten Winkelstellung der Wälzkörper 6 die gewünschte Sollkontur erreicht. Indem die Wälzkörper 6 entlang der linienförmigen Kontaktfläche gegeneinander vorgespannt werden und dadurch ihre elastisch verformte Arbeitsposition erreichen, tritt eine definierte Materialverformung im Wesentlichen quer zur Vorspannkraft F parallel zu der Längsrichtung einer jeweiligen Schwenkachse 14 der Wälzkörper 6 ein, wie dies in Figur 4 durch Richtungspfeile 15 verdeutlicht wird. Neben der hier theoretisch eintretenden lateralen Verbreiterung der Wälzkörper 6, die in der Praxis durch das Gehäuse begrenzt ist, führt die mediale Verformung zu einer Reduzierung der Breite b der Ausnehmung 7, die in Verbindung mit der geringfügigen Annäherung der Wälzkörper 6 und der damit verbundenen Reduzierung der Tiefe t der Ausnehmungen 7 zu der gewünschten kreisförmigen Durchlassöffnung 2 führt.

Um eine definierte und zuverlässig reproduzierbare Verformung sicherzustellen, hat jeder Wälzkörper 6 einen Kern 16 aus einem im Wesentlichen formstabilen Material, welcher umfangsseitig von dem elastischen Verformungselement 12 eingeschlossen ist, wie dies in Figur 5 erkennbar ist. Dabei hat das Verformungselement 12 über den gesamten Umfang des Wälzkörpers 6 eine konstante Materialstärke s, sodass der Kern 16 eine entsprechende Kontur aufweist. Hierdurch wird ein gleichmäßiger kraftabhängiger Verformungsgrad sichergestellt, welcher sich durch die unterschiedliche Breite B, b der Ausnehmung 7 nicht verändert.

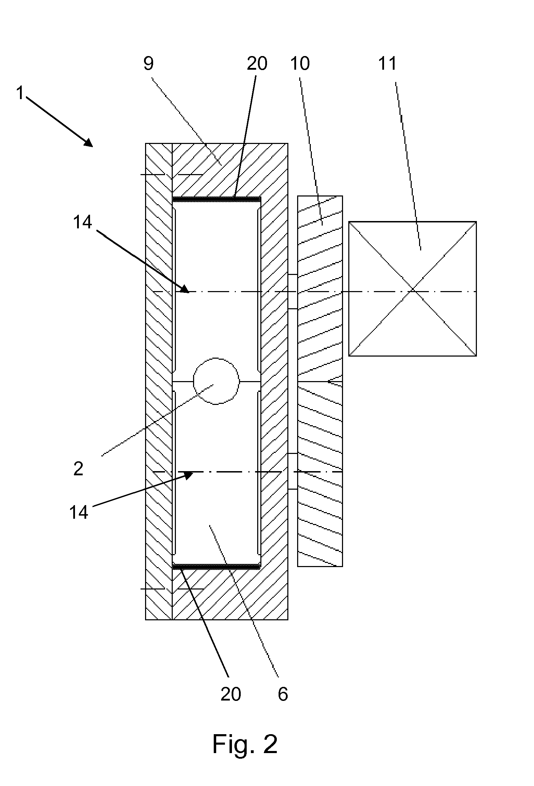

Dabei beschränkt sich das Verformungselement 12 nicht nur auf den Umfang des Wälzkörpers 6, sondern bedeckt auch einen Randbereich der Stirnfläche 17 des Wälzkörpers 6, wobei ein axial vorspringender Rand 18 eine einfache stirnseitige Abdichtung gegenüber dem die Wälzkörper 6 einschließenden, in den Figuren 1 und 2 dargestellten Gehäuse 9 ermöglicht. Darüber hinaus wird ein Ringspalt 19 zwischen dem Umfangsabschnitt des jeweiligen Wälzkörpers 6 und dem Gehäuse 9 durch eine radiale Erweiterung 20 des Verformungselements 12 erreicht, die eine parallel zu der Schwenkachse 14 verlaufende Dichtlippe bildet.

## Patentansprüche

1. Vorrichtung (1) zur variablen, insbesondere stufenlosen Einstellung einer als Dichtung wirksamen Durchlassöffnung (2, 2') für ein kontinuierlich oder diskontinuierlich hindurchtretendes strangförmiges Erzeugnis (5), mit zwei einander entlang linienförmiger Kontaktflächen berührenden Wälzkörpern (6) mit jeweils einer zumindest abschnittsweise am Umfang verlaufenden, konkaven Ausnehmung (7), wobei die Ausnehmung (7) entlang ihrer Haupterstreckung eine unterschiedliche Breite (B, b) und/oder Tiefe (T, t) aufweist und die Ausnehmungen (7) der Wälzkörper (6) gemeinsam die Durchlassöffnung (2, 2') begrenzen, wobei die Querschnittsfläche der Durchlassöffnung (2, 2') durch eine relative Drehung (Pfeilrichtung 13) der Wälzkörper (6) um ihre jeweilige Schwenkachse (14) veränderbar ist, **dadurch gekennzeichnet, dass** jeder Wälzkörper (6) zumindest einen die jeweilige Ausnehmung (2, 2') einschließenden, elastisch verformbaren Bereich aufweist, sodass die entlang der Kontaktlinie gegeneinanderliegenden Wälzkörper (6) gemeinsam in einer unverformten Ruheposition eine von der kreisförmigen Sollform wesentlich abweichende Durchlassöffnung (2') einschließen und in einer entlang der linienförmigen Kontaktfläche gegeneinander anliegenden, elastisch verformten Arbeitsposition durch eine definierte Materialverformung eine der kreisförmigen Sollform entsprechende Durchlassöffnung (2) einschließen, sodass durch eine synchrone Drehung der Wälzkörper (6) unterschiedlich große kreisförmige Konturen des Erzeugnisses (5) dichtend eingeschlossen sind.

2. Vorrichtung (1) nach Anspruch 1, **dadurch gekennzeichnet, dass** die Vorrichtung (1) genau zwei Wälzkörper (6) aufweist.

3. Vorrichtung (1) nach den Ansprüchen 1 oder 2, **dadurch gekennzeichnet, dass** aufgrund der elastischen Verformung ein verdrängter Materialanteil des elastischen Bereichs des Wälzkörpers (6) parallel zur Kontaktlinie in den Bereich der Ausnehmung (2) hineinverlagert ist.

4. Vorrichtung (1) nach zumindest einem der vorhergehenden Ansprüche, **dadurch gekennzeichnet, dass** die Wälzkörper (6) zueinander von der Ruheposition, in welcher die Wälzkörper (6) entlang der Kontaktlinie gegeneinanderliegen, in die Arbeitsposition mit einem Betrag von 1 bis 10 mm, vorzugsweise zwischen 2 und 5 mm, zustellbar ausgeführt sind.

5. Vorrichtung (1) nach zumindest einem der vorhergehenden Ansprüche, **dadurch gekennzeichnet, dass** jeder Wälzkörper (6) einen Kern (16) aus einem im Wesentlichen formstabilen Material aufweist, welcher umfangsseitig von einem den verformbaren Bereich bildenden elastischen Verformungselement (12) eingeschlossen ist.

6. Vorrichtung (1) nach Anspruch 5, **dadurch gekennzeichnet, dass** das Verformungselement (12) über den gesamten Umfang des Wälzkörpers (6) im Bereich der Ausnehmung (7) eine im Wesentlichen konstante Materialstärke (s) aufweist.

7. Vorrichtung (1) nach Anspruch 5 oder 6, **dadurch gekennzeichnet, dass** das Verformungselement (12) den gesamten Umfang des Wälzkörpers (6) und zumindest abschnittsweise die Stirnfläche (17) des Wälzkörpers (6) bildet.

8. Vorrichtung (1) nach Anspruch 5 oder 6, **dadurch gekennzeichnet, dass** das Verformungselement (12) zumindest abschnittsweise als ein mit einem Fluid beaufschlagbarer Hohlkörper ausgeführt ist.

9. Vorrichtung (1) nach zumindest einem der vorhergehenden Ansprüche, **dadurch gekennzeichnet, dass** zwischen dem Gehäuse (9) und einer Stirnfläche (17) des jeweiligen Wälzkörpers (6) ein Dichtungselement angeordnet ist.

10. Vorrichtung (1) nach zumindest einem der vorhergehenden Ansprüche, **dadurch gekennzeichnet, dass** die Vorrichtung (1) ein Gehäuse (9) aufweist, welches mit einem Umfangsabschnitt der Wälzkörper (6) jeweils einen Ringspalt (19) einschließt.

11. Vorrichtung (1) nach Anspruch 10, **dadurch gekennzeichnet, dass** in dem Ringspalt (19) eine insbesondere durch eine radiale Erweiterung (20) des Verformungselements (12) gebildete Dichtlippe angeordnet ist.

12. Vorrichtung (1) nach zumindest einem der vorhergehenden Ansprüche, **dadurch gekennzeichnet, dass** jeder Wälzkörper (6) um die Mittellängsachse seiner zylindrischen Hüllform schwenkbeweglich angeordnet ist.

13. Vorrichtung (1) nach zumindest einem der vorhergehenden Ansprüche, **dadurch gekennzeichnet, dass** die Wälzkörper (6) zur Einstellung der Durchlassöffnung (2) insbesondere mittels eines gemeinsamen Antriebs (11) synchron schwenkbeweglich ausgeführt sind.

## Claims

1. Device (1) for the variable, in particular continuous adjustment of a passage orifice (2, 2'), active as a seal, for a strand-shaped product (5) passing through continuously or discontinuously, with two rolling bodies (6) touching one another along linear contact surfaces and having in each case a concave recess (7) running at least partially on the circumference, the recess (7) having a different width (B, b) and/or depth (T, t) along its main extent, and the recesses (7) of the rolling bodies (6) together delimiting the passage orifice (2, 2'), the cross-sectional area of the passage orifice (2, 2') being variable by means of a relative rotation (direction of arrow 13) of the rolling bodies (6) about their respective pivot axis (14), **characterized in that** each rolling body (6) has at least one elastically deformable region enclosing the respective recess (7), so that the rolling bodies (6) lying opposite one another along the contact line, in a non-deformed position of rest, together enclose a passage orifice (2') deviating substantially from the circular desired form and, in an elastically deformed working position bearing against one another along the linear contact surface, enclose, as a result of a defined material deformation, a passage orifice (2) corresponding to the circular desired form, so that, by synchronous rotation of the rolling bodies (6), circular contours of the product (5) which are of different size are sealingly enclosed.

2. Device (1) according to Claim 1, **characterized in that** the device (1) has exactly two rolling bodies (6).

3. Device (1) according to either one of Claims 1 and 2, **characterized in that**, on account of the elastic deformation, a displaced material fraction of the elastic region of the rolling body (6) is shifted, parallel to the contact line, into the region of the recess (7).

4. Device (1) according to at least one of the preceding claims, **characterized in that** the rolling bodies (6) are designed to be adjustable with respect to one another from the position of rest, in which the rolling bodies (6) lie opposite one another along the contact line, into the working position in an amount of 1 to 10 mm, preferably of between 2 and 5 mm.

5. Device (1) according to at least one of the preceding claims, **characterized in that** each rolling body (6) has a core (16) which is made from an essentially dimensionally stable material and which is enclosed circumferentially by an elastic deformation element (12) forming the deformable region.

6. Device (1) according to Claim 5, **characterized in that** the deformation element (12) has an essentially constant material thickness (s) of the entire circumference of the rolling body (6) in the region of the recess (7).

7. Device (1) according to Claim 5 or 6, **characterized in that** the deformation element (12) forms the entire circumference of the rolling body (6) and at least partially the end face (17) of the rolling body (6).

8. Device (1) according to Claim 5 or 6, **characterized in that** the deformation element (12) is designed at least partially as a hollow body capable of being acted upon by a fluid.

9. Device (1) according to at least one of the preceding claims, **characterized in that** a sealing element is arranged between the housing (9) and an end face (17) of the respective rolling body (6).

10. Device (1) according to at least one of the preceding claims, **characterized in that** the device (1) has a housing (9) which together with a circumferential portion of each of the rolling bodies (6) encloses an annular gap (19).

11. Device (1) according to Claim 10, **characterized in that** a sealing lip formed, in particular, by means of radial widening (20) of the deformation element (12) is arranged in the annular gap (19).

12. Device (1) according to at least one of the preceding claims, **characterized in that** each rolling body (6) is arranged in a pivotably moveable manner about the longitudinal mid-axis of its cylindrical enveloping form.

13. Device (1) according to at least one of the preceding claims, **characterized in that** the rolling bodies (6) are designed to be pivotably moveable in a synchronous manner, in particular, by means of a common drive (11) in order to adjust the passage orifice (2).

## Revendications

1. Dispositif (1) pour le réglage variable, en particulier en continu, d'une ouverture de passage (2, 2') agissant en tant que joint d'étanchéité pour un article (5) en forme de barre passant à travers de manière continue ou discontinue, comprenant deux corps de roulement (6) en contact l'un avec l'autre le long de surfaces de contact linéaires et présentant respectivement un évidement concave (7) s'étendant au moins partiellement sur la périphérie, l'évidement (7) présentant, le long de son étendue principale, une largeur (B, b) et/ou une profondeur (T, t) différentes et les évidements (7) des corps de roulement (6) délimitant conjointement l'ouverture de passage (2, 2'), la surface en section transversale de l'ouverture de passage (2, 2') pouvant être modifiée par une rotation relative (sens de la flèche 13) des corps de roulement (6) autour de leur axe de pivotement (14) respectif, **caractérisé en ce que** chaque corps de roulement (6) comprend au moins une région déformable élastiquement entourant l'évidement (7) respectif, de telle sorte que les corps de roulement (6) situés l'un contre l'autre le long de la ligne de contact entourent conjointement, dans une position de repos non déformée, une ouverture de passage (2') différant essentiellement de la forme de consigne circulaire et, dans une position de travail déformée élastiquement par une déformation de matériau définie, dans laquelle position de travail ils sont appliqués l'un contre l'autre le long de la surface de contact linéaire, entourent une ouverture de passage (2) correspondant à la forme de consigne circulaire, de telle sorte que, par une rotation synchrone des corps de roulement (6), des contours circulaires de différentes tailles de l'article (5) soient entourés de manière étanche.

2. Dispositif (1) selon la revendication 1, **caractérisé en ce que** le dispositif (1) comprend exactement deux corps de roulement (6).

3. Dispositif (1) selon l'une quelconque des revendications 1 et 2, **caractérisé en ce qu'**en raison de la déformation élastique, une proportion de matériau refoulée de la région élastique du corps de roulement (6) est déplacée, parallèlement à la ligne de contact, dans la région de l'évidement (7).

4. Dispositif (1) selon au moins l'une quelconque des revendications précédentes, **caractérisé en ce que** les corps de roulement (6) sont réalisés de manière à pouvoir être rapprochés l'un vers l'autre, avec une valeur de 1 à 10 mm, de préférence entre 2 et 5 mm, de la position de repos, dans laquelle les corps de roulement (6) sont situés l'un contre l'autre le long de la ligne de contact, à la position de travail.

5. Dispositif (1) selon au moins l'une quelconque des revendications précédentes, **caractérisé en ce que** chaque corps de roulement (6) comprend un noyau (16) en un matériau essentiellement à stabilité de forme, lequel noyau est entouré du côté périphérique par un élément de déformation élastique (12) formant la région déformable.

6. Dispositif (1) selon la revendication 5, **caractérisé en ce que** l'élément de déformation (12) présente, sur toute la périphérie du corps de roulement (6), une épaisseur de matériau (s) essentiellement constante dans la région de l'évidement (7).

7. Dispositif (1) selon la revendication 5 ou 6, **caractérisé en ce que** l'élément de déformation (12) forme l'ensemble de la périphérie du corps de roulement (6) et au moins partiellement la surface frontale (17) du corps de roulement (6).

8. Dispositif (1) selon la revendication 5 ou 6, **caractérisé en ce que** l'élément de déformation (12) est réalisé au moins partiellement en tant que corps creux pouvant être sollicité par un fluide.

9. Dispositif (1) selon au moins l'une quelconque des revendications précédentes, **caractérisé en ce qu'**un élément d'étanchéité est disposé entre le boîtier (9) et une surface frontale (17) du corps de roulement (6) respectif.

10. Dispositif (1) selon au moins l'une quelconque des revendications précédentes, **caractérisé en ce que** le dispositif (1) comprend un boîtier (9), lequel entoure, avec une portion périphérique des corps de roulement (6), un interstice annulaire (19) respectif.

11. Dispositif (1) selon la revendication 10, **caractérisé en ce qu'**une lèvre d'étanchéité formée en particulier par un élargissement radial (20) de l'élément de déformation (12) est disposée dans l'interstice annulaire (19).

12. Dispositif (1) selon au moins l'une quelconque des revendications précédentes, **caractérisé en ce que** chaque corps de roulement (6) est disposé de manière mobile en pivotement autour de l'axe médian longitudinal de sa forme d'enveloppe cylindrique.

13. Dispositif (1) selon au moins l'une quelconque des revendications précédentes, **caractérisé en ce que** les corps de roulement (6) sont réalisés de manière mobile en pivotement de façon synchrone en particulier au moyen d'un entraînement commun (11) pour le réglage de l'ouverture de passage (2).
